(19) **Europäisches Patentamt**
**European Patent Office**
**Office européen des brevets**

(11) Veröffentlichungsnummer: **0 250 761**
**A1**

(12) **EUROPÄISCHE PATENTANMELDUNG**

(21) Anmeldenummer: **87106143.8**

(51) Int. Cl.⁴: **C08G 69/16**

(22) Anmeldetag: **28.04.87**

(30) Priorität: **28.06.86 DE 3621804**

(43) Veröffentlichungstag der Anmeldung:
**07.01.88 Patentblatt 88/01**

(84) Benannte Vertragsstaaten:
**CH DE FR IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Meyer, Klaus-Rudolf, Dr.**
**Auf der Ürfte 3**
**D-4320 Hattingen-Blankenstein(DE)**
Erfinder: **Venn, Ingo, Dr.**
**Mittlere Mühle 21**
**D-4350 Recklinghausen(DE)**
Erfinder: **Müller-Niescher, Ursula, Dr.**
**Kaspar-Grove-Strasse 32**
**D-4370 Marl(DE)**

(54) **Verfahren zur Herstellung eines präpolymeren Amids aus einem C12-Aminocarbonsäurelactam.**

(57) Verfahren zur Herstellung eines präpolymeren Amids aus einem $C_{12}$-Aminocarbonsäurelactam bei erhöhter Temperatur und erhöhtem Druck, indem
-bei einem Wasserdampfdruck im Bereich von 30 bis 180 bar
-bei einer Temperatur im Bereich von 240 bis 360 °C
-bei einem Wassergehalt im Lactam/Wasser-Gemisch im Bereich von 7,5 bis 30 Gewichtsprozent
gearbeitet wird.

## Verfahren zur Herstellung eines präpolymeren Amids aus einem $C_{12}$-Aminocarbonsäurelactam

Gegenstand der Erfindung ist ein Verfahren zur Herstellung eines präpolymeren Amids mit einem Polymerisationsgrad im Bereich von 5 bis 20 (Zahlenmittel),hergestellt aus einem $C_{12}$-Aminocarbonsäurelactam, durch hydrolytische Polymerisation bei erhöhter Temperatur und erhöhtem Druck.

Die Herstellung von präpolymeren Amiden ausgehend von Aminocarbonsäurelactamen in Gegenwart von erhöhter Temperatur und erhöhtem Druck ist grundsätzlich bekannt.

So beschreibt die JP-OS 59/164 327 eine Arbeitsweise für die Herstellung von Polykondensaten aus Lactamen mit 7 bis 12 Ringgliedern in einem Temperaturbereich von 220 bis 280 °C und einem Druck im Bereich bis zu 10 bar. Diese Festlegung der Parameter führt dazu, daß die Raum/Zeit-Ausbeute bei $C_{12}$-Aminocarbonsäure-Polykondensaten zu unbefriedigenden Ergebnissen führt.

Ferner ist aus JP-OS 60/41 647 ein Verfahren bekannt, das bei Temperaturen im Bereich von 295 bis 370 °C und einem Wassergehalt von 2 bis 50 Gewichtsprozent arbeitet.

Aufgabe der Erfindung ist es, bei dem Verfahren zur Herstellung eines präpolymeren Amids aus einem $C_{12}$-Aminocarbonsäurelactam die Temperatur und den Wassergehalt des Reaktionsgemisches so ins Verhältnis zu setzen, daß eine gute Wirtschaftlichkeit erreicht wird.

Diese Aufgabe wird erfindungsgemäß gelöst, indem
-bei einem Wasserdampfdruck im Bereich von 30 bis 180 bar
-bei einer Temperatur im Bereich von 240 bis 360 °C
-bei einem Wassergehalt im Lactam/Wasser-Gemisch im Bereich von 7,5 bis 30 Gewichtsprozent
gearbeitet wird.

Das chemische Verfahren - ausgehend von Aminocarbonsäurelactamen -präpolymeres Amid herzustellen, ist in allen chemischen und technischen Details bekannt (Ullmanns Enzyklopädie d. techn. Chemie (4. Aufl.), Bd. 19, Kap. 2.2 und Kap. 3).

Erfindungsgemäß wird bei einem Wasserdampfdruck im Bereich von 30 bis 180 bar, vorzugsweise bei 60 bis 150 bar, bei einer Temperatur im Bereich von 240 bis 360 °C, vorzugsweise bei 280 bis 355 °C und bei einem Wassergehalt des Lactam/Wasser-Gemisches im Bereich von 7,5 bis 30 Gewichtsprozent, vorzugsweise 10 bis 25 Gewichtsprozent, gearbeitet. Bei einer weiteren bevorzugten Arbeitsweise wird ein Wasserdampfdruck im Bereich von 45 bis unter100 bar, eine Temperatur von 260 °C bis zu einer Grenze, deren über dem Wassergehalt linearer Verlauf durch die Wertepaare

340 °C - 3,0 Gewichtsprozent Wasser,

325 °C - 10,0 Gewichtsprozent Wasser,

310 °C - 20,0 Gewichtsprozent Wasser,

300 °C - 30,0 Gewichtsprozent Wasser

festgelegt ist,und ein Wassergehalt im Bereich von 7,5 bis 30 Gewichtsprozent gewählt.

Bei $C_{12}$-Aminocarbonsäurelactam als Ausgangsmonomer können bis zu 6,5 Gewichtsprozent dieses Monomeren durch Caprolactam und/oder Hexamethylendiaminund Dodecandicarbonsäure ersetzt werden.

Mit Hilfe des erfindungsgemäßen Verfahrens wird es nunmehr möglich, die Raum/Zeit-Ausbeute innerhalb des vorgegebenen Druckbereiches wirtschaftlichzu gestalten.

Überraschenderweise wurde gefunden, daß sich die Reaktionszeiten trotz eines mit steigendem Wassergehalt noch zunehmenden Druckes nicht unter einen Grenzwert absenken lassen und letzterer bereits bei vergleichsweise mäßigem Wassergehalt erreicht wird (Tabelle I).

Durch das erfindungsgemäße Verfahren wird es in unerwarteter Weise möglich, die Raum/Zeit-Ausbeute deutlich zu verbessern. So ist nach dem Stand der Technik bei fast quantitativem Umsatz eine Reaktionszeit von ca. 6 bis 8 Stunden erforderlich. Nach dem erfindungsgemäßen Verfahren kann die Zeit je nach Abstimmung der Parameter auf 10 Minuten bis 3,5 Stunden gesenkt werden.

Beispiele

Die Versuche 1 bis 6 und A bis C (entsprechend JP-OS 60/41 647) wurden durchgeführt in einem Hochdruckautoklaven von 1000 ml Nennvolumen, ausgerüstet mit Rührer, elektrischer Heizung, Temperatur-und Druckmeßeinrichtung, Stutzen für Stickstoff-und Vakuumanschluß sowie Dosier-und Probenentnahmevorrichtung.

Nach Einfüllen von Laurinlactampellets, Spülen mit Reinst-Stickstoff und Evakuieren (5 mbar) wurde der Reaktor aufgeheizt und anschließend die hydrolytische Polymerisation durch schnelles Zudosieren von unter $N_2$ destilliertem und auf Reaktionstemperatur thermostatisiertem Wasser gestartet.

Die bei der Reaktionstemperatur unter Druck entnommenen Proben wurden rasch auf Raumtemperatur gekühlt. Der Wassergehalt wurde gravimetrisch über die Gewichtsabnahme beim Trocknen (50 °C, 100 mbar) ermittelt. Die Bestimmung des zahlenmittleren Polymerisationsgrades ($\overline{P_n}$) erfolgte über eine Endgruppenanalyse (potentiometrische Titration des in m-Kresol bzw. über Indikatortitration des in siedendem Benzylalkohol gelösten Materials). Der Laurinlactamgehalt wurde gaschromatographisch bestimmt.

Die Raum/Zeit-Ausbeute wurde unter Annahme von Additivität der Partialvolumina von Wasser und Laurinlactam bei Reaktionstemperatur errechnet.

Die Versuchsparameter und -ergebnisse können Tabelle I entnommen werden.

Tabelle I

| Vers.-Nr. | Einsatzmenge Laurin- lactam (g) | Wasser (g) | Reaktions- temperatur (°C) | maximaler Druck (bar) | Reaktionszeit (min) | Wassergehalt der Probe (Gew.-%) | Rest-Laurin- Lactamgehalt d. getr. Probe (Gew.-%) | $\overline{P_n}$ | Raum-Zeit- Ausbeute $\dfrac{10^3 \text{ to}}{m^3 \cdot \text{Jahr}}$ |
|---|---|---|---|---|---|---|---|---|---|
| A | 728,5 | 38,5 | 355 | 59 | 22 | 2,9 | 0,55 | 18,3 | 18 |
| 1 | 676,0 | 75,5 | 355 | 103 | 15,5 | 7,5 | 0,60 | 12,1 | 24 |
| 2 | 577,5 | 144,5 | 355 | 144 | 12 | 15,5 | 0,43 | 8,5 | 27 |
| 3 | 486,5 | 208,5 | 355 | 167 | 12 | 24,9 | 0,53 | 7,4 | 23 |
| B | 402,0 | 268,0 | 355 | 170 | 13,5 | 35,0 | 0,67 | 6,2 | 17 |
| 4 | 618,0 | 154,5 | 318 | 102 | 40 | 16,9 | 0,48 | 9,8 | 8,5 |
| C | 447,0 | 298,0 | 318 | 109 | 45 | 37,2 | 0,60 | 7,5 | 5,5 |
| 5 | 736,0 | 82,0 | 278 | 51 | 298 | 8,5 | 0,50 | 17,2 | 1,32 |
| 6 | 648,0 | 162,0 | 278 | 62 | 211 | 18,2 | 0,52 | 12,3 | 1,65 |

Bei den Versuchen D bis I wurde gemäß der JP-OS 60/41 641 gearbeitet, indem mittels zweier Kolbenmembrandosierpumpen Wasser und flüssiges Laurinlactam nach Aufheizen auf Reaktionstemperatur am Kopf eines mit Statik-Mixer-Elementen ausgestatteten, elektrisch beheizten Reaktionsrohres von 10,2 l Volumen vereinigt wurden. Nach Passieren des Reaktionsrohres wurde die Schmelze auf 210 °C abgekühlt und über ein Druckhalteventil (130 bar) in einen auf konstantem Druck von 20 bar gehaltenen Kessel ausgefahren.

Zwischen Ausgang des Reaktionsrohres und Kühlstrecke konnte über eine Probenentnahmevorrichtung Schmelze unter Druck entnommen werden. Die Proben wurden rasch auf Raumtemperatur abgekühlt und wie oben beschrieben, auf den Gehalt an Wasser und Restlaurinlactam sowie den zahlenmittleren Polymerisationsgrad hin analysiert.

Die Verweilzeit wurde unter Annahme von Additivität der Partialvolumina von Wasser und Laurinlactam bei Reaktionstemperatur aus dem Volumen des Rohrreaktors und dem Förderstrom berechnet. -

Die Versuchsparameter und -ergebnisse können Tabelle II entnommen werden.

## Tabelle II

| Vers.-Nr. | Einsatzmenge | | Reaktions-temperatur | Verweil-zeit | Wassergehalt der Probe | Rest-Laurin-lactamgehalt d. getr. Probe | $\overline{P_n}$ | Raum-Zeit-Ausbeute |
| | Laurin-lactam | Wasser | | | | | | |
| | kg/h | kg/h | °C | min | Gew.-% | Gew.-% | | $\dfrac{10^3 \text{ to}}{m^3 \cdot \text{Jahr}}$ |
|---|---|---|---|---|---|---|---|---|
| D | 7,892 | 0,733 | 318 | 56 | 8,0 | 1,0 | 14,0 | 6,8 |
| E | 9,788 | 2,076 | 318 | 40 | 16,8 | 0,8 | 9,6 | 8,5 |
| F | 6,294 | 3,858 | 318 | 45 | 37,3 | 0,9 | 7,4 | 5,5 |
| G | 11,055 | 1,027 | 318 | 40 | 8,2 | 5,1 | - | - |
| H | 9,788 | 2,076 | 318 | 40 | 16,8 | 0,8 | - | - |
| I | 7,091 | 4,346 | 318 | 40 | 37,5 | 1,6 | - | - |

0 250 761

## Ansprüche

1. Verfahren zu Herstellung eines präpolymeren Amids mit einem Polymerisationsgrad im Bereich von 5 bis 20 (Zahlenmittel), hergestellt aus einem $C_{12}$-Aminocarbonsäurelactam, durch hydrolytische Polymerisation bei erhöhter Temperatur und erhöhtem Druck, dadurch gekennzeichnet, daß

-bei einem Wasserdampfdruck im Bereich von 30 bis 180 bar

-bei einer Temperatur im Bereich von 240 bis 360 °C

-bei einem Wassergehalt im Lactam/Wasser-Gemisch im Bereich von 7,5 bis 30 Gewichtsprozent

gearbeitet wird.

2. Verfahren gemäß Anspruch 1, dadurch gekennzeichnet, daß

-bei einem Wasserdampfdruck im Bereich von 60 bis 150 bar

-bei einer Temperatur im Bereich von 280 bis 355 °C

-bei einem Wassergehalt im Lactam/Wasser-Gemisch im Bereich von 10 bis 25 Gewichtsprozent

gearbeitet wird.

3. Verfahren gemäß Anspruch 1, dadurch gekennzeichnet, daß

-bei einem Wasserdampfdruck im Bereich von 45 bis 100 bar

-bei einer Temperatur von 260 °C·bis unterhalb einer Grenze, deren über dem Wassergehalt linearer Verlauf durch die Wertepaare

340 °C - 3,0 Gewichtsprozent Wasser,

325 °C - 10,0 Gewichtsprozent Wasser,

310 °C - 20,0 Gewichtsprozent Wasser,

300 °C - 30,0 Gewichtsprozent Wasser festgelegt ist,

-bei einem Wassergehalt im Lactam/Wasser-Gemisch im Bereich von 7,5 bis 30 Gewichtsprozent

gearbeitet wird.

**Europäisches Patentamt**

**EUROPÄISCHER RECHERCHENBERICHT**

Nummer der Anmeldung

| EINSCHLÄGIGE DOKUMENTE | | | EP 87106143.8 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE - B2 - 2 152 194 (CHEMISCHE WERKE HÜLS AG)<br><br>* Spalte 2, Zeilen 50-59 *<br><br>-- | 1-3 | C 08 G 69/16 |
| X | US - A - 4 077 946 (ENENSHTEIN et al.)<br><br>* Zusammenfassung; Beispiel 1 *<br><br>-- | 1-3 | |
| X | DE - A - 1 570 774 (INVENTA AG FÜR FORSCHUNG UND PATENTVERWERTUNG)<br><br>* Anspruch 1; Beispiele 1,4 *<br><br>---- | 1-3 | |
| | | | RECHERCHIERTE SACHGEBIETE (Int. Cl.4) |
| | | | C 08 G 69/00 |

Der vorliegende Recherchenbericht wurde für alle Patentansprüche erstellt.

| Recherchenort | Abschlußdatum der Recherche | Prüfer |
|---|---|---|
| WIEN | 06-10-1987 | WEIGERSTORFER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82